# EUROPEAN PATENT APPLICATION

(11) **EP 0 622 022 A1**
(43) Date of publication of application: **02.11.1994**
(21) Application number: 94201040.6
(22) Date of filing: 15.04.1994
(51) Int. Cl.: A22C 7/00

(54) **Machine for the production of balls of minced meat, fish and such like with a rounded, in particular substantially spherical, shape**

(30) Priority: 27.04.1993 IT MI930816
(71) Applicant: REFIN S.r.l., I-36100 Vicenza (IT)
(72) Inventor: Righele, Giovanni Battista, I-36010 Zane' (Vincenza) (IT)
(74) Representative: Mittler, Enrico

(57) **Abstract**

A machine for the production of balls of minced product of meat, fish and such like comprises an extrusion pump (5) of a minced product (3), an apportioning device (40) of the product (3) itself and a sliding support (12) to receive product portions (4) of any shape delivered by said pump (5) through said device (40). A forming plate (13), located above said sliding support (12) at a distance substantially equal to the thickness of said product portions (4), moves in an alternating motion, in a transversal direction to that of the support (12), between two end positions, so that the combination of the motion imparted to said portions (4) by said plate (13) with that imparted by the support (12) imposes on the portions (4) themselves a rotation and translation motion suitable for imparting to said product portions (4) a rounded shape, in particular substantially spherical.

## Description

The present invention relates to a machine for the production of balls of minced meat, fish and such like with a rounded, in particular substantially spherical shape.

The commercial success met by food products of minced meat, fish and such like that exhibit new external shapes, in particular in the shape of a small spherical ball, is well known.

To this end there are several forming machines on the market, that comprise an apparatus for the extrusion of the minced product paste and, at the outlet, a forming device for apportioning the product and give it the desired shape; such forming device can be constituted by rollers having cells of the desired shape, as well as by extrusion tubes with various conformations provided with suitable apportioning blades.

Such machines are fairly complex, and they are in any case different from traditional packing machines, essentially constituted by simple pumps with an apportioning device, from which the product is ejected with a necessarily cylindrical or prismatic shape, in any case always with a constant and never spherical cross-section.

In view of the described state of the art, the object of the present invention is the provision of a machine for the production of balls of minced meat, fish and such like having a rounded, in particular substantially spherical shape, that can use the same pumps normally used in ordinary packing machines.

According to the present invention, such object is attained thanks to a machine for the formation of balls comprising an extrusion pump, an apportioning device and a sliding support to receive product portions delivered by said pump through said apportioning device, characterized in that it also comprises a forming plate located above said sliding support, at a distance from the latter substantially corresponding to the thickness of said product portions, and alternately movable, in a direction perpendicular to that in which the sliding support moves, between two end positions under the action of motor means to impart to said portions, in combination with the sliding support, a rotation and translation motion suitable for imparting to them a rounded, in particular substantially spherical shape.

In a preferred embodiment of the machine according to the invention, for the provision of balls with a spherical shape, the distance of the forming plate from the sliding support increases along the latter's direction of movement, so as to compensate for the increase in the diameter of the product portions between entry and exit of the forming plate due to the transformation of the portions themselves from a cylindrical or prismatic conformation with a constant cross-section to one that is substantially spherical.

Thanks to the machine according to the invention it is possible to obtain balls of product with a sperical shape starting from portions of the same with any shape, thanks to the action exerted on said product portions on the part of the forming plate and to the combination of the longitudinal motion of the sliding support with the transversal one of the forming plate itself. For the extrusion of the minced product it is possible to use a traditional pump for packed products.

The shape of the balls can also be changed by correspondingly changing the sliding speed of the support, or the frequency of the alternating motion of the forming plate, or both these parameters.

It is also possible to obtain balls formed by two different products coextruded and incapsulated simply by using a pair of pumps for coextruded and incapsulated products, for example of the type described in the Italian patent application No. MI92U000721 dated 22 July 1992.

These and other features of the present invention will be made more evident by the following detailed description of an embodiment thereof shown as a non-limiting example in the enclosed drawings, wherein:

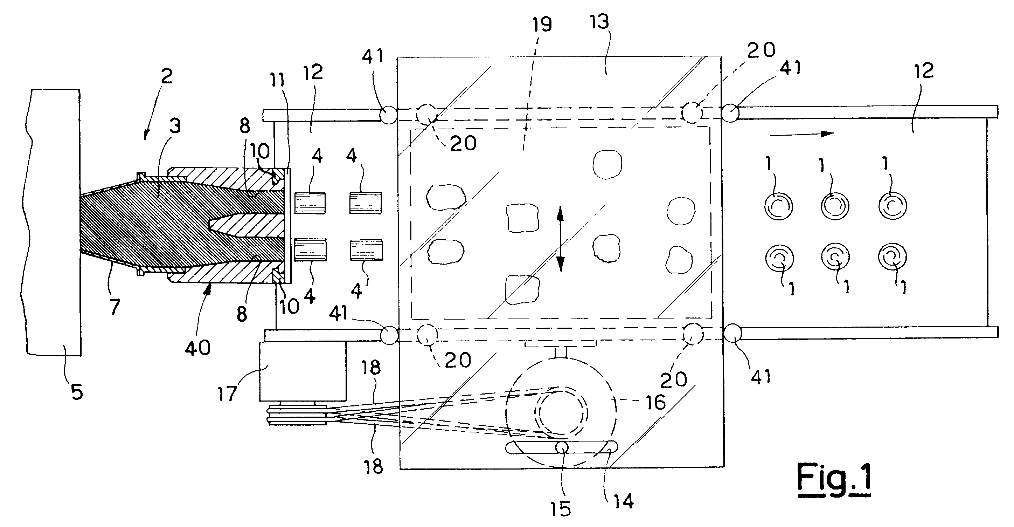

- Fig. 1 shows a plan view and a partially-sectioned view of a machine according to the invention, with the forming plate in a first end position;

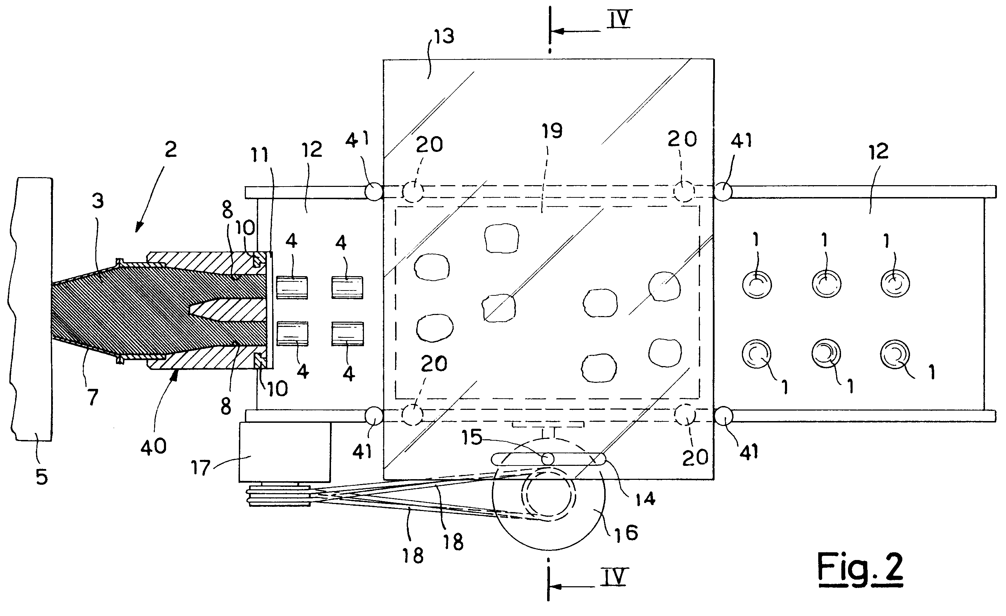

- Fig. 2 is similar to Fig. 1, but with the forming plate in a second end position;

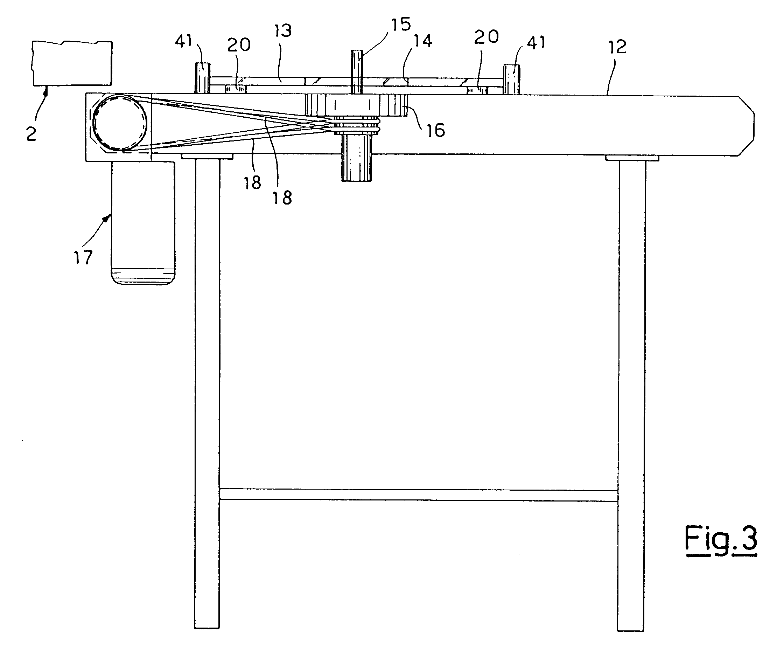

- Fig. 3 is a lateral view of the abovementioned machine;

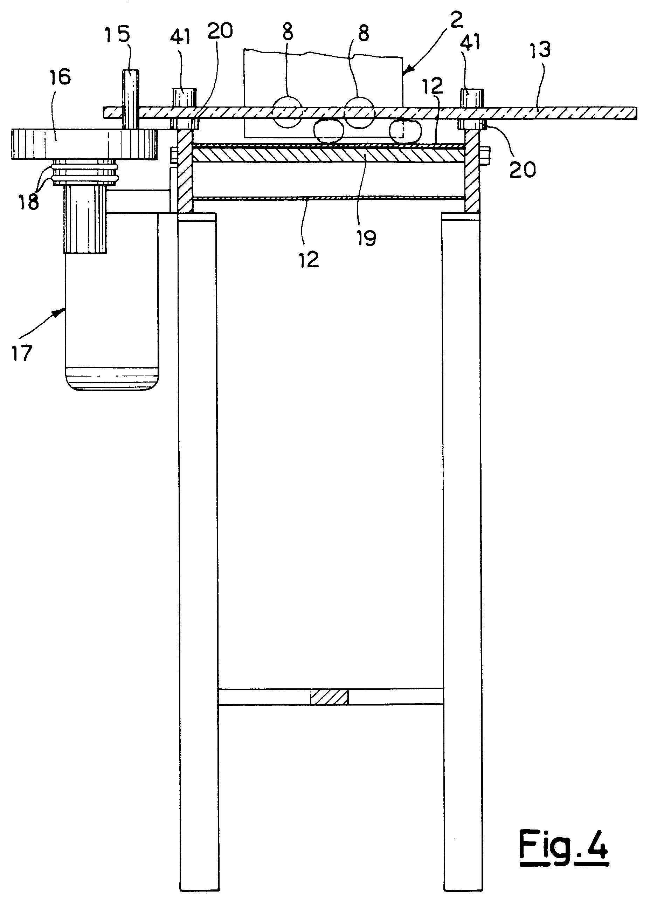

- Fig. 4 is cross-sectional view taken along the line IV-IV of Fig. 2 of the abovementioned machine;
- Fig. 5 shows a plan view and a partially-sectioned view of an extrusion and apportioning apparatus included in the abovementioned machine;
- Fig. 6 is a front view of the apparatus of Fig. 5;
- Fig. 7 is cross-sectional view taken along the line VII-VII of a part of the apparatus of Fig. 5.

With reference to the drawings, a machine for the production of balls 1 comprises an extrusion and apportioning apparatus 2 for a paste 3 of a minced meat, fish or such like product for the formation of portions 4 of such product.

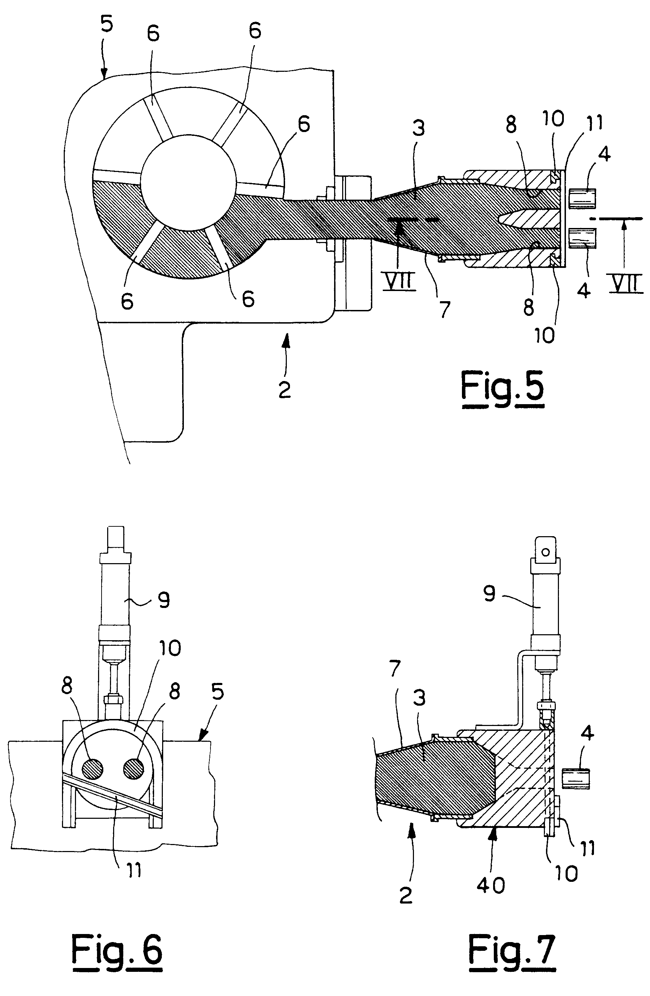

As shown in Figs. 5-7, such extrusion apparatus 2 comprises a volumetric pump 5, for example of the radial vane pump type 6 as described in the Italian utility model patent No. 173 842 dated 15 March 1985, to which there is connected an outlet manifold 7 terminating inside an apportioning device 40 with one or more outlet ports 8, for example two. A cylinder 9, for example pneumatic, drives the downward movement of a fork 10 located at the outlet of the ports 8, to which there is also fastened a blade 11 for apportioning by cutting the product 3 and for the consequent formation of portions 4 with a cylindrical shape and a constant cross-section.

The extrusion apparatus 2 feeds a belt-type sliding support 12, on which the portions 4 are deposited by gravity, as a consequence of the cutting operation by the blade 11.

A forming plate 13 is located above the entire width of the sliding support 12, and extends in the direction of sliding of the support 12 itself. Along one of the sides parallel to the direction of sliding of the support 12 the plate 13 is provided with a slit 14, in which there is inserted a pin 15 integral with a rotating drum 16.

An electric motor 17 determines the sliding movement of the sliding support 12 and, by means of transmission belts 18, the rotation of the drum 16 for the consequent alternating transversal movement of the plate 13 under the action of the pin 15 in the slit 14 and the guidance of vertical rods 41.

A striker plate 19 is located under the sliding support 12 opposite the forming plate 13 above.

Four spacers 20 determine the distance between the sliding support 12 and the forming plate 13.

When the machine is in operation, the extrusion apparatus 2 feeds the sliding support 12 with product portions 4, obtained thanks to the periodic translation of the blade 11.

The motor 17 causes the sliding movement of the support 12, and the consequent movement of the portions 4 themselves. When the latter reach the entry of the forming plate 13, which is in turn subjected to an alternating transversal motion, they are forced to roll over themselves and to follow a zig-zag path, given by the combination of the sliding movement of the support 12 and by the alternating transversal one imposed on them by the plate 13. The rolling action imparts on the portions 4 a shape that gradually approaches the spherical one, so that balls 1 are obtained at the outlet from the plate 13. The striker plate 19 ensures that the support 12 does not yield to the pressure exerted on the portions 4 by the forming plate 13.

It is evident that obtaining balls 1 having as spherical a shape as possible requires a larger number of rolling movements of the portions 4; for a plate 13 having a given longitudinal extension, this can be obtained both by reducing the speed of the support 12, and by increasing the frequency of the alternating motion of the plate 13. By varying one or both these two parameters it is however possible to obtain balls 1 with a variable shape, in any case always rounded both laterally and in the front and rear.

The width of the support 12, its sliding speed, the dimensions of the plate 13 and the frequency of its alternating transversal motion should in any case be selected on the basis of the final shape desired for the balls 1 and of productivity. For a support 12 with a width of 350 mm and sliding at a speed of 7 m per minute, a plate 13 has been found suitable, for producing spherical balls, with a width of 650 mm and a length of 700 mm, with a transversal stroke with respect to the support 12 ranging from 120 mm to 170 mm, and with a frequency of the alternating motion of 40 cycles per minute. Other dimensions and speeds could well be shown to be similarly suitable.

Since in addition the product portions 4 have an essentially elongated shape, while the balls 1 have a substantially spherical shape, it follows that the latter have a diameter greater than the initial height of the portions 4. The plate 13 should therefore be placed at a distance from the support 12 that increases along the direction of sliding of the support 12 itself. This is obtained by inclination of the plate 13 attained by adjustment of the spacers 20.

It is also evident that it is possible to obtain balls constituted by two types of product coextruded and incapsulated, starting from product portions 4 equally coextruded and incapsulated; this requires only the use of a pair of pumps for packed products coextruded and incapsulated, for example of the type described in the abovementioned Italian patent application.

## Claims

1. Machine for the formation of balls (1) of minced product of meat, fish and such like comprising an extrusion pump (5), an apportioning device (40) and a sliding support (12) to receive product portions (4) delivered by said pump (5) through said apportioning device (40), characterized in that it also comprises a forming plate (13) located above said sliding support (12) at a distance from the latter substantially corresponding to the thickness of said product portions (4), and alternately movable, in a direction perpendicular to that in which the sliding support (12) moves, between two end positions under the action of motor means (17) to impart to said portions (4), in combination with the sliding support (12), a rotation and translation motion suitable for imparting to them a rounded, in particular substantially spherical shape.

2. Machine according to claim 1, characterized in that said forming plate (13) is provided with a slit (14) engaged by a pin (15) integral with a drum (16) rotating under the action of said motor means (17), there being provided means (41) for the guidance of the transversal movement of the forming plate (13).

3. Machine according to claim 1, characterized in that said forming plate (13) rests on adjustable spacers (20) that allow it to be inclined with respect to said sliding support (12) so that the distance of the forming plate (13) from the latter increases in the direction of its sliding movement.

4. Machine according to claim 1, characterized in that there is a striker plate (19) under the sliding support (12) opposite the forming plate (13).
